(19) **Europäisches Patentamt**
**European Patent Office**
**Office européen des brevets**

(11) **EP 1 861 752 B1**

(12) **EUROPEAN PATENT SPECIFICATION**

(45) Date of publication and mention
of the grant of the patent:
**04.05.2011 Bulletin 2011/18**

(51) Int Cl.:
***G05B 13/02*** (2006.01)

(21) Application number: **06726469.7**

(22) Date of filing: **22.03.2006**

(86) International application number:
**PCT/GB2006/001045**

(87) International publication number:
**WO 2006/100478 (28.09.2006 Gazette 2006/39)**

(54) **CONTROL OF PROCESSES**

REGELUNG VON PROZESSEN

COMMANDE DE PROCESSUS

(84) Designated Contracting States:
**AT BE BG CH CY CZ DE DK EE ES FI FR GB GR
HU IE IS IT LI LT LU LV MC NL PL PT RO SE SI
SK TR**

(30) Priority: **22.03.2005 GB 0505800**

(43) Date of publication of application:
**05.12.2007 Bulletin 2007/49**

(73) Proprietor: **THE UNIVERSITY OF SHEFFIELD
Sheffield, S10 2TN (GB)**

(72) Inventors:
• **OWENS, David, H.
Dore
Sheffield S17 3NB (GB)**
• **DALEY, Stephen
Oadby
Leicester LE2 5QL (GB)**
• **HATONEN, Jari, Juhani
00260 Helsinki (FI)**

(74) Representative: **Wilson, Alan Stuart
Barker Brettell LLP
100 Hagley Road
Edgbaston
Birmingham
B16 8QQ (GB)**

(56) References cited:
• **HATZIKOS V E ET AL: "An evolutionary based
optimisation method for nonlinear iterative
learning control systems" PROCEEDINGS OF
THE 2003 AMERICAN CONTROL CONFERENCE.
ACC. DENVER, CO, JUNE 4 - 6, 2003, AMERICAN
CONTROL CONFERENCE, NEW YORK, NY :
IEEE, US, vol. VOL. 6 OF 6, 4 June 2003
(2003-06-04), pages 3638-3643, XP010667055
ISBN: 0-7803-7896-2**
• **HATONEN J J ET AL: "A new robust iterative
learning control algorithm for application on a
gantry robot" EMERGING TECHNOLOGIES AND
FACTORY AUTOMATION, 2003. PROCEEDINGS.
ETFA '03. IEEE CONFERENCE SEPT. 16-19, 2003,
PISCATAWAY, NJ, USA,IEEE, vol. 2, 16
September 2003 (2003-09-16), pages 305-312,
XP010671013 ISBN: 0-7803-7937-3**
• **HATONEN J ET AL: "An algebraic approach to
iterative learning control" PROCEEDINGS OF
THE 2002 IEEE INTERNATIONAL SYMPOSIUM
ON INTELLIGENT CONTROL.(ISIC'02).
VANCOUVER, CANADA, OCT. 27 - 30, 2002, IEEE
INTERNATIONAL SYMPOSIUM ON INTELLIGENT
CONTROL, NEW YORK, NY : IEEE, US, 27 October
2002 (2002-10-27), pages 37-42, XP010622955
ISBN: 0-7803-7620-X**
• **DIMIROVSKI G M ET AL: "On learning control in
industrial furnaces and boilers" INTELLIGENT
CONTROL, 2000. PROCEEDINGS OF THE 2000
IEEE INTERNATIONAL SYMPOSIUM ON JULY
17-19, 2000, PISCATAWAY, NJ, USA,IEEE, 17 July
2000 (2000-07-17), pages 67-72, XP010522330
ISBN: 0-7803-6491-0**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**EP 1 861 752 B1**

**Description**

The present invention relates to the control of processes, and in particular to iterative learning in the tuning of the control of such processes.

Iterative Learning Control (also called simply Iterative Control) has a thirty-year history and was introduced to produce improvements in demand signals on processes that can repeat and where the accuracy of tracking errors, i.e. the difference between the desired output signal and the actual output arising from a chosen control input, is crucial to the performance of the application. Although applicable to many processes in a variety of industries where repetition is essential to the process or possible as a mechanism for product or process tuning or improvement, a major user of the technology is in dynamic testing, and in particular the automotive sector where examples include laboratory road-load simulation and component testing. Such systems utilise hydraulic test rigs that are required to put car assemblies or components through known road loadings, i.e. specific forces and accelerations, with high accuracy. The benefits to the industry are the ability to put the components through a test of real-world circumstances to high accuracy using a laboratory facility only. Such testing offers a low cost alternative to the utilisation of test tracks and enables continuous operation that accelerates the process of fatigue assessment. An additional advantage is that sub-assembly testing is made possible and component efficacy can therefore be assessed early in the development cycle.

In general, the required high accuracy necessary in such test rigs cannot be achieved using conventional control methods. As a consequence, it is necessary and, indeed, industrial practice, to improve control signals and tracking accuracy during a rig commissioning phase by using iteration in the form of repetitive experiments supported by appropriate methods of analysis. Ideally, the desired accuracy ultimately is achieved and the rig can be used for the required test purposes.

The effectiveness of the iteration process is measured by the degree to which the output signals are the same as that required (high accuracy is usually essential), the number of iterations necessary to achieve acceptable tracking error (it is desirable that the error is reduced to an acceptable level in a small number of iterations so that the fatigue life of the specimen is not unnecessarily reduced), and the extent to which serious problems such as divergence (whereby the tracking error continually increases with each iteration) are avoided. Other sector specific needs such as the avoidance of problems with resonant payloads can also be included but, in the main, these are implied by the above general criteria.

In "An evolutionary based optimisation method for nonlinear iterative learning control systems" (HATZIKOS V E ET AL), Proceedings of the 2003 American Control Conference, Denver, CO, June 4 - 6, 2003, IEEE, US, vol. 6 OF 6, 4 June 2003 (2003-06-04), XP010667055 ISBN: 0-7803-7896-2, a genetic algorithm based optimisation method for iterative learning control systems on a non-linear dynamical system to give monotonic convergence is disclosed.

Industrial practice and current products are based on what is termed the "inverse model algorithm" which uses a model of process dynamics to update inputs in each iteration using an implementation that is equivalent to a formula of the form

$$u_{k+1} = u_k + \beta G^{-1} e_k$$

where
$e_k = r - y_k$ (i.e. the tracking error sequence), in which
r is the desired output sequence,
$y_k$ is the actual output sequence;
$u_k$ the control input signal sequence for the iteration k;
$u_{k+1}$ is the control input signal sequence for the next iteration k + 1;
$u_k$, $u_{k+1}$, $e_k$ and $y_k$ are all time series, being made up of a number of elements for respective times over a single cycle.
β is a scalar "learning" gain that dictates the amount by which the control input sequence is updated during each iteration; and
G is a mathematical model of the test rig or system that describes the relationship between the control input sequence and the resultant output (symbolically y=Gu); this is obtained from a prior system identification experiment.

The "inverse model algorithm" is based on a simple mathematical principle that suggests that the value β=1 should be used. This approach is known to be highly sensitive to modelling errors i.e. inaccuracies in the mathematical model G used in the iterations. As a consequence, current products use this algorithm modified by the empirical scalar gain β in order to introduce caution by limiting changes in control inputs from iteration to iteration. Although used in practice, it is known to have many problems that mean that industry is looking for improved and more reliable products.

The present invention provides a control system for controlling a process. The system is arranged to repeat the process over a number of cycles in a learning phase. The system may have one or more separate input channels. The aim of the repetitions is to modify the input iteratively over successive cycles (sometimes called trials, iterations or passes) so that a defined output or set of outputs of the process approaches a desired reference output to high accuracy. The level of accuracy needed is specified by the application. At each iteration, the process input is determined in a manner that is equivalent to the minimization of a cost function that measures the errors expected and the degree of control effort that will be expended. The cost function may include the tracking error between a calculated output for the current input and the reference output.

It may also include the change between the input of a previous iteration and the current iteration.

Accordingly the present invention provides a control system for tuning a process performed by an apparatus, the system being arranged to control at least one input to the process and to modify the input iteratively over successive cycles so that an output of the process approaches a reference output, and so that, at each iteration a current input $u_{k+1}$ is determined from a previous input $u_k$ using an update algorithm, or update equation, having the general form

$$u_{k+1} = u_k + \beta_{k+1}(I + G^*G)^{-1}G^*e_k$$

where
$\beta_{k+1}$ is a tuning parameter
G is a model of the apparatus
$e_k$ is a measure of tracking error.

It will be appreciated that various modifications to this equation can be made whilst still retaining the general form. For example tuning parameters or filters can be added to it.

The present invention further provides corresponding methods of controlling a process, the method comprising control at least one input to the process and modifying the input iteratively over successive cycles so that an output of the process approaches a reference output.

Preferred embodiments of the present invention will now be described by way of example only with reference to the accompanying drawings in which:

Figure 1 is a diagram showing a system and controller according to an embodiment of the invention;

Figure 2 is a graph showing tracking error in the system of Figure 1;

Figure 3 is a diagram showing a system and controller according to a further embodiment of the invention; and

Figure 4 is a graph showing tracking error in a further system according to the invention.

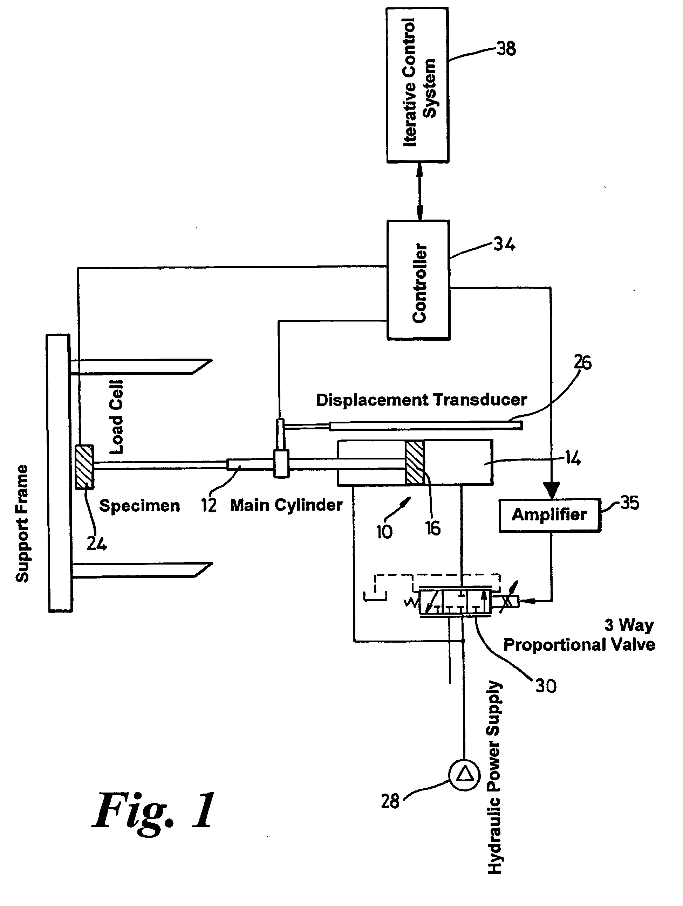

Referring to Figure 1, a dynamic test system according to an embodiment of the invention comprises a test apparatus including an actuator 10 and a load 12. This system is typical of single axis test machines and the load characteristics depend on the specimen under test. The actuator 10 comprises an actuator cylinder 14 with an actuator piston 16 slidable therein. The load 12 is connected to the actuator piston 16 so that movement of the actuator piston 16 can cause movement of the load 12. A force sensor 24 is arranged to measure the force applied to the load 12, and a displacement transducer 26 is arranged to measure displacement of the actuating piston 16. Hydraulic fluid is fed from a pressure source 28 via a 3-way proportional valve 30 to the actuator cylinder 14. The proportional valve 30 (which could also be a servo-valve) is controlled, by a control signal from a controller 34, via an amplifier 35, so as to control the hydraulic pressure applied to the actuator 10.

The controller 34 can be configured to regulate either the displacement of the load or the force transmitted by feeding back the appropriate measurement signal to the controller. The iterative control system 38 interfaces with the controller, 34 to provide a command signal so that the force or displacement in the load accurately replicates a required sequence. For the example considered here, displacement control is required and the load 12 is an additional cylinder subjected to viscous resistance forces. The iterative control system 38 is in the form of a PC running suitable software, and includes a display which can provide an output showing measured parameters such as the measured displacements from each cycle and an indication of the tracking error from the cycle. It also includes a user input that enables a user to control or vary parameters of the iterative control process as will be described in more detail below.

The iterative control system 38 is arranged to provide an input sequence for the controller 34 so that the actuator 10 produces an output in the load 12 that is as close as possible to a regular cyclical reference displacement. In this case the cyclical displacement is defined in the time domain as a sequence of displacements at respective times in the cycle. These displacements are defined as a one-dimensional matrix, or vector, r having one element for each of the sequence of reference displacements that define a single cycle.

The iterative control system 38 also has stored in it a linear mathematical model G of the load, amplifier, valve and controller. This model is a mathematical definition of the outputs that will be produced, in this case displacements of the load piston, for any given inputs, in this case time series signals to the controller 34. This model enables an initial set of input signals u(1) that should, according to the model, be input to the controller 34, in order to produce the reference output displacement r. This can be done by any methodology preferred by the user but, in particular, could be done using the inverse model algorithm described above. However, particularly as the valve 30 and load are non-linear systems, the model cannot be exactly accurate, and the controller is therefore arranged to measure the time series of output displacements y during each cycle, compare them to the reference displacements r, determine the tracking error $e_k$, i.e. the difference between the measured output displacements y and the reference displacements r, and modify the input signals for the next cycle so that the output displacements tend to converge towards the reference displacements.

Once the first input signal u(1) has been input to the system, then, for all subsequent iterations, an algorithm is used to modify the input signals at each cycle or iteration. The algorithm is arranged to minimize a cost function J that includes a sum of two functions, one of which is the normalized tracking error, as predicted using the system model G and the other of which is the normalized change in input signal u from the previous iteration $u_k$ to the current iteration $u_{k+1}$. J is given by:

$$J(u_{k+1}) = ||e_{k+1}||^2 + ||u_{k+1} - u_k||^2 \qquad (1)$$

where $||f||$ denotes a quadratic norm on the time series f, and the $e_{k+1}$ term is a sum of squares error of the time series.
Minimizing this function, as a first optimization stage, gives

$$u_{k+1} = u_k + (I + G{*}G)^{-1}G{*}e_k \qquad (2)$$

where $G^*$ is the adjoint operator of the model G. The actual mathematical form of $G^*$ is dependent on the choice of norms for input and outputs, and I is the unit matrix.
Equation (2) is then used to generate the input $u_{k+1}$ for each cycle in the iterative learning process from the inputs $u_k$ for the previous cycle, the measured tracking error $e_k$ from the previous cycle, and the model G. Use of equation (2) gives a value of $u_{k+1}$ that minimizes the cost function J.
Caution is introduced into the methodology by the introduction of a learning gain parameter $\beta_{k+1}$, that can be updated for each iteration, either by the iterative control system 38 on the basis of a suitable algorithm, or by a user who can input a suitable value manually. This process is represented by the control update formula

$$u_{k+1} = u_k + \beta_{k+1}(I + G{*}G)^{-1}G{*}e_k \qquad (3)$$

A particular choice of norm

$$J(u_{k+1}) = ||e_{k+1}||_Q^2 + ||u_{k+1} - u_k||_R^2$$

is equivalent to adding tuning parameters to the approach which gives an update equation

$$u_{k+1} = u_k + \beta_{k+1}(I + R_{k+1}^{-1}G{*} Q_{k+1}G)^{-1} R_{k+1}^{-1}G{*}Q_{k+1}e_k \qquad (4)$$

where $R_{k+1}$ and $Q_{k+1}$ are the tuning parameters, in the form of matrices, that can be defined by the user to increase or decrease the convergence speed of the algorithm or to replace the sum of squared errors by a weighted sum of squared errors. As can be seen this update equation is of the same general form as equation (3) but with the addition of the tuning parameters.
The choice of $\beta_{k+1}$ in equation (4) can be based on experience of plant operation guided by plant operators.

Alternatively it can be deduced from mathematical optimisation methods.

In order to determine a value for $\beta$ using optimisation a second function for minimization is defined as

$$J(\beta_{k+1}) = ||e_{k+1}||^2 + w_{k+1}\beta^2_{k+1}, \ w_{k+1} > 0 \qquad (5)$$

where $w_{k+1}$ is a tuning parameter chosen by the user to reflect the degree of caution that is desired in the implementation on iteration k+1, and can be updated at each iteration as required.

This function (5) is minimized in another stage of optimization, for the chosen value of $w_{k+1}$, to determine the optimum value of $\beta_{k+1}$ to be used in equation (4).

The next input signal $u_{k+1}$ is therefore calculated from equation (4) above and input to the system, and the iteration repeated. At each iteration, the performance is measured, by monitoring the tracking error $e_{k+1}$ and when it reaches a satisfactory level the inputs are fixed at the current values, and no further iterations are necessary.

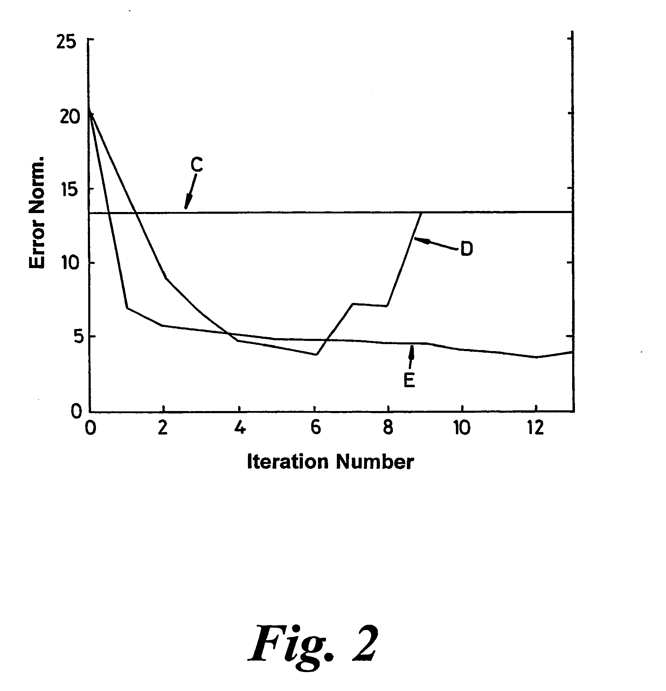

Figure 2 shows experimental results achieved using the algorithm described above in the system of Figure 1. Figure 2 is a graph showing normalized error for each iteration. As can be seen, compared to the constant error of a non-iterative control strategy, shown by line C, the inverse model strategy, shown by line D, produces an error that decreases quite rapidly up to the fourth iteration, then more gently to the sixth iteration, and then actually increases again. This illustrates that in this example the inverse model strategy is divergent, which is clearly undesirable. In comparison, the strategy described above, shown by line E, produces an error that decreases more rapidly over the first two iterations, and thereafter decreases steadily but more slowly for all of the twelve iterations shown.

In a modification to the method described above, the optimization process for finding the gain $\beta$ can be omitted, and the gain parameter set to a constant by the user.

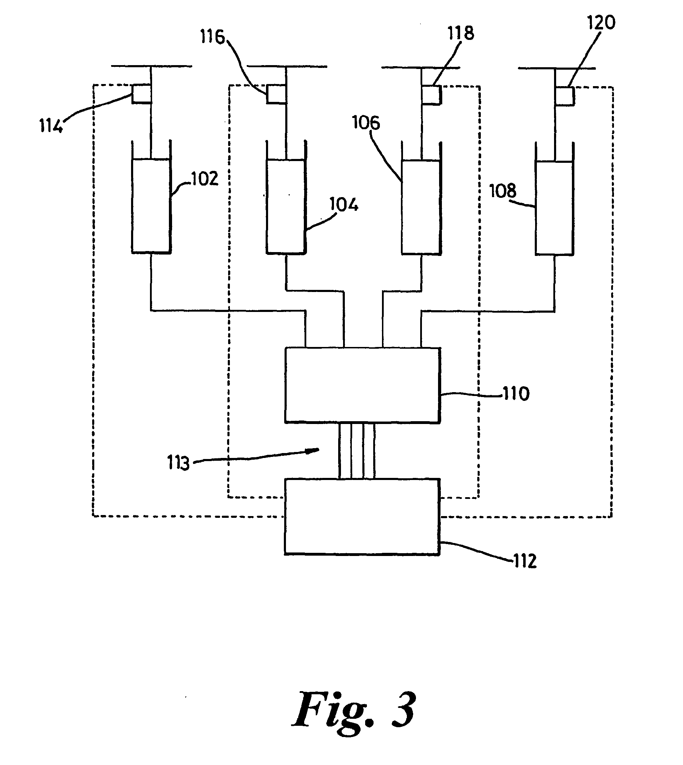

Referring to Figure 3, a system according to a further embodiment of the invention is a multi-axis system having a plurality of actuators, each of which is controlled by a respective input signal. In this example the system is a vehicle road test simulator in which there are four actuators 102, 104, 104, 108 each arranged to produce a repeating cycle of input displacements to a respective wheel of a vehicle. The actuators 102, 104, 104, 108 are hydraulic and controlled via a hydraulic valve block 110 by a controller 112. The controller 112 provides four separate control signals to the valve block on four channels 113 to control the hydraulic pressures to the four actuators 102, 104, 104, 108. Displacement sensors 114, 116, 118, 120 are arranged to measure the displacements of the four actuators 102, 104, 106, 108 and provide signals to the controller 112 indicating those displacements.

The control of this system is similar to the first embodiment. However, it will be appreciated that the input signal matrix u is now a stacked "super-vector" having one time-series for each input signal or channel. The matrix not only includes the signal inputs for the different times in the cycle, as in the first embodiment, but the signal inputs for all actuators.

The algorithm for modifying the input signals at each iteration therefore includes a further tuning parameter, and takes the form

$$u_{k+1} = u_k + \beta_{k+1}(I + R_{k+1}^{-1} G^*Q_{k+1} G)^{-1} R_{k+1}^{-1}G^* Q_{k+1} e_k \qquad (6)$$

where $Q_{k+1}$ and $R_{k+1}$ are tuning parameters, again in the form of matrices, that can weight the different channels so that the signals for the different actuators are modified at different rates. These again control the convergence rate, but in the multi-channel system they can be used to place different emphasis or priority on the convergence rates of the different channels. These can be selected initially based on the specified channel accuracies and if necessary modified as the iterations proceed in order to accelerate convergence in problematic channels. The modification can be carried out automatically by the iterative control system, or manually by a user inputting the required modification between iterations.

In a further embodiment the update equation is modified further to include one or more filters. These can be selected and modified to filter the inputs u so as to reduce the sensitivity of the algorithm to, for example, noise or modelling errors. Generally it will be known if the model is not accurate at certain frequencies, and so the response of the update algorithm at those frequencies can be reduced. Similarly if the system suffers noise at known frequencies, the response of the update algorithm can be reduced at those frequencies also. The update equation in this embodiment takes the form

$$u_{k+1} = u_k + \beta_{k+1}F_{1,k+1} (I + R_{k+1}^{-1}G^* Q_{k+1}G)^{-1} R_{k+1}^{-1}G^*Q_{k+1} F_{2,k+1} e_k \qquad (7)$$

where $F_{1,k+1}$ and $F_{2,k+1}$ are filters, which may be constant, but can be updated at each iteration if this is required. Since the update equation is used after one iteration has been completed and before the next one is started, all of the measurement data from the previous iteration k is available when the update equation is used, and the filters may therefore be causal or anti-causal filters. In general, two filters will be desirable, one arranged to filter out noise and the other to filter out modelling errors, to allow independent compensation of noise and modelling error effects. However, in some cases it is appropriate to include just one of the filters $F_{1,k+1}$ or $F_{2,k+1}$.

In a modification to the embodiment just described, either one or both of the filters is modified in a pseudo-random manner for each iteration. This is in addition to any systematic modification to the filters between iterations. The pseudo random variation can be derived, for example, by randomly changing a filter parameter. Alternatively a random function of frequency can be generated by any suitable method and combined with the filter function of the previous iteration to produce the modified filter for the current iteration. It has been found that such pseudo-random variation in the filters can reduce the final tracking error, towards which the system converges. This final tracking error can be non-zero in practice due to the effect of modelling errors.

The random variation must be sufficient to generate a wide range of changes and can be realized either through the use of computer random number generators or cycling through a large enough choice of filters or filter parameters. Filters can be changed every iteration or on iterations selected by the operator.

This random or pseudo-random variation in the filter is applicable to other iterative learning processes and is not limited to use with the methods using an update equation of the general form of equation (3). For example it can be used with the inverse model algorithm described above

In some systems it is more appropriate for the input signal matrix u to be defined, rather than in the time domain as a set of signal values at respective times during the cycle, as a discrete Fourier transform comprising a set of coefficients defining gain and phase shifts at discrete frequency components of the signal. In this case the system model G and the update equation are transformed so as to operate in the frequency domain also.

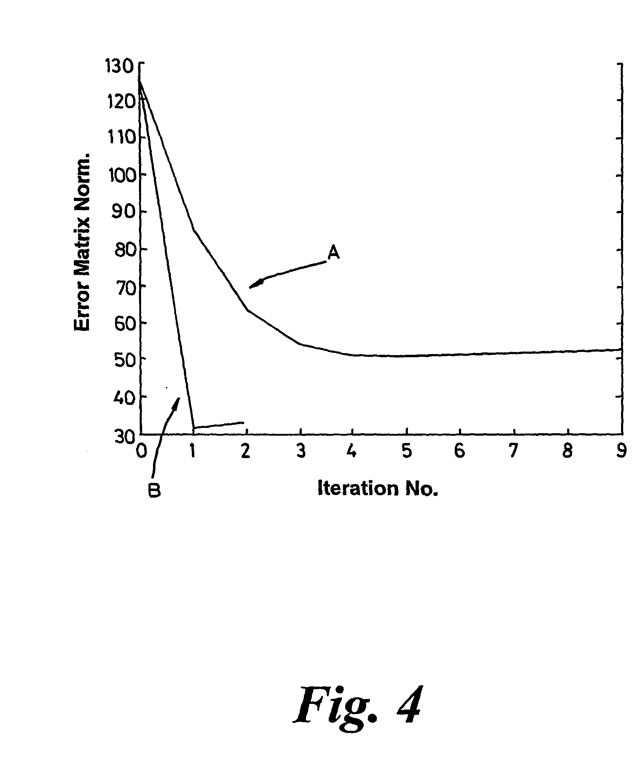

A further embodiment of this invention that has been tested is a five-axis vehicle body component test rig. This system was controlled using the algorithm (6) above and the results are shown in Figure 4, which shows the normalized tracking error from all five actuators over a series of iterations. Curve A represents the results using an industry standard approach, and curve B represents the results using the present invention. As can be seen the convergence rate using this embodiment of the invention is substantially greater than that for the industry standard.

Another embodiment of the invention that has been tested is a six axis earthquake simulation table. Here the problem is complicated both by the requirement to replicate acceleration profiles (that represent a true seismic event) yet to control with displacement commands and by the presence of a resonant payload. Again the convergence rate and accuracy achieved was shown to be superior to the industry standard methodology. This is an example of an application where, because the final process is to simulate a single earthquake, the final process is not repeating within a single test, but needs to repeat accurately from one test to the next.

It will be appreciated that the embodiments described above have a number of advantageous properties. Because they are based on a sequence of optimisation problems and include algorithms that have clearly defined mathematical properties and avoid the serious sensitivity problems of the "inverse model" approach. In particular they automatically contain frequency filtering elements that avoid large update gain in the region of the plant zeros. Hence they are much less sensitive to structural resonance in the payload than the inverse model approach. The use of optimisation methodologies ensures that they also possess the ability to continually produce improvements from iteration to iteration, i.e. they systematically reduce the norm of the tracking error and hence generally avoid divergence that can arise with the inverse model approach. The "tuning parameters" enable the user to place different emphasis on errors in different output channels, increase or decrease the "aggression" of the algorithm, and increase or decrease the sensitivity or robustness of the algorithm to model uncertainties. More generally, the tuning parameters enable the user to intervene to correct any deficiencies in algorithm performance due to unforeseen factors. Consequently, the embodiments described provide an environment where both experienced users and users with limited knowledge of the technical detail can effectively use and tune the methodology to suit their needs.

The commercial benefits arising from the invention can be listed as follows: increased accuracy; increased convergence rates; reduced occurrence of divergence; reduction in the number of required iterations; reduced costs to the user; increased throughput of the testing facility; and increased reliability.

The invention has application in a number of industries where repetition is an essential or desired ingredient of test or manufacturing processes, including automotive manufacturing and test, aerospace manufacturing and test, seismic testing, manufacturing automation, chemical batch processing, and medical applications involving "batch" treatment or muscle/nerve rehabilitation through repetitive exercise.

**Claims**

1. A control system for tuning a process performed by an apparatus, the system being arranged to control at least one input to the process and to modify the input iteratively over successive cycles so that an output of the process approaches a reference output, and so that, at each iteration a current input $u_{k+1}$ is determined from a previous input $u_k$ using an update algorithm so as to minimize a cost function, the cost function including the tracking error between a calculated output for the current input and the reference output, and the change between the input of a previous iteration and the current iteration, **characterized in that** the update algorithm has the general form

$$u_{k+1} = u_k + \beta_{k+1}(I + G*G)^{-1}G*e_k$$

where
$\beta_{k+1}$ is a tuning parameter
G is a model of the apparatus
$e_k$ is a measure of tracking error.

2. A control system according to claim 1 wherein the cost function includes a sum of two functions, one of which is a measure of the tracking error and the other of which is a measure of the change in input between iterations.

3. A control system according to claim 2 wherein the cost function is the sum of the normalized tracking error and the normalized change in input between iterations.

4. A control system according to any foregoing claim arranged to minimize the cost function subject to at least one tuning further parameter.

5. A control system according to claim 4 wherein the further tuning parameter is arranged to control convergence speed.

6. A control system according to claim 5 wherein the further tuning parameter is user definable to enable tuning of the convergence speed.

7. A control system according to any foregoing claim wherein the update algorithm is of the general form

$$u_{k+1} = u_k + \beta_{k+1}(I + R_{k+1}^{-1}G* \, Q_{k+1}G)^{-1} \, R_{k+1}^{-1}G*Q_{k+1}e_k$$

where $Q_{k+1}$ and $R_{k+1}$ are tuning parameters.

8. A control system according to any foregoing claim arranged to optimize the tuning parameter $\beta_{k+1}$ in a manner determined by the tracking error.

9. A control system according to any foregoing claim wherein at least one of the tuning parameters is user definable.

10. A control system according to claim 9 further comprising a user input arranged to enable a user to input at least one of the tuning parameters.

11. A control system according to claim 10 wherein the user input is arranged to enable the user to update the at least one tuning parameter between iterations.

12. A control system according to any foregoing claim arranged to control a plurality of inputs of the process, and to modify each input iteratively over successive cycles.

13. A control system according to claim 12 arranged to modify the inputs using a weighting factor arranged to weight the inputs so that the rate at which each input is modified can be controlled independently.

**14.** A control system according to claim 13 when dependent on claim 7 wherein at least one of the tuning parameters includes the weighting factor.

**15.** A control system according to any foregoing claim arranged to determine an initial input from the reference output and a model of the system.

**16.** A control system according to any foregoing claim arranged to measure the output at each iteration and, when at one iteration the output meets a predetermined requirement, to cease modification of the input.

**17.** A method of tuning the control of a process performed on an apparatus, the method comprising controlling at least one input to the process and modifying the input iteratively over successive cycles so that an output of the process approaches a reference output, and so that, at each iteration a current input $u_{k+1}$ is determined from a previous input $u_k$ using an update algorithm so as to minimize a cost function, the cost function including the tracking error between a calculated output for the current input and the reference output, and the change between the input of a previous iteration and the current iteration, **characterized in that** the update algorithm has the general form

$$u_{k+1} = u_k + \beta_{k+1}(I + G^*G)^{-1}G^*e_k$$

where
$\beta_{k+1}$ is a tuning parameter
G is a model of the apparatus
$e_k$ is a measure of tracking error.

**18.** A method according to claim 17 wherein the cost function includes a sum of two functions, one of which is a measure of the tracking error and the other of which is a measure of the change in input between iterations.

**19.** A method according to claim 18 wherein the cost function is the sum of the normalized tracking error and the normalized change of in input between iterations.

**20.** A method according to any of claims 17 to 19 wherein the cost function is minimized subject to at least one further tuning parameter.

**21.** A method according to claim 20 wherein the further tuning parameter is arranged to control convergence speed.

**22.** A method according to claim 21 wherein the further tuning parameter is user defined to tune the convergence speed.

**23.** A method according to any of claims 20 to 22 wherein the update algorithm is of the general form

$$u_{k+1} = u_k + \beta_{k+1}(I + R_{k+1}^{-1}G^* \ Q_{k+1}G)^{-1} \ R_{k+1}^{-1}G^*Q_{k+1}e_k$$

where $Q_{k+1}$ and $R_{k+1}$ are tuning parameters.

**24.** A method according to any of claims 17 to 23 wherein the tuning parameter $\beta_{k+1}$ is optimized in a manner determined by the tracking error.

**25.** A method according to any of claims 17 to 23 wherein the tuning parameter $\beta_{k+1}$ is user defined.

**26.** A method according to any of claims 17 to 25 wherein the process has a plurality of inputs, the method comprising modifying each input iteratively over successive cycles.

**27.** A method according to claim 26 wherein the inputs are modified using a weighting factor arranged to weight the inputs so that the rate at which each input is modified is controlled independently.

28. A method according to claim 27 when dependent on claim 23 wherein at least one of the tuning parameters includes the weighting factor.

29. A method according to any of claims 17 to 28 including determining an initial input from the reference output and a model of the system.

30. A method according to any of claims 17 to 29 including measuring the output at each iteration and, when at one iteration the output meets a predetermined requirement, ceasing modification of the input.

31. A control system according to any of claims 1 to 16 wherein the update algorithm includes a filter.

32. A control system according to claim 31 wherein the filter is arranged to be updated between iterations.

33. A control system according to claim 32 arranged to enable a user to update the filter.

34. A control system according to any of claims 31 to 33 wherein the update algorithm is of the general form

$$u_{k+1} = u_k + \beta_{k+1}F_{1,k+1}(I + R_{k+1}^{-1}G^*\,Q_{k+1}G)^{-1}\,R_{k+1}^{-1}G^*Q_{k+1}\,F_{2,k+1}\,e_k$$

where $F_{1,k+1}$ and $F_{2,k+1}$ are filters.

35. A control system according to any of claims 31 to 34 arranged to produce an irregular variation in the filter between iterations.

36. A method according to any of claims 17 to 30 wherein the update algorithm includes a filter.

37. A method according to claim 36 wherein the filter is updated between iterations.

38. A method according to claim 36 wherein the filter is updated manually.

39. A method according to any of claims 36 to 38 wherein the update algorithm is of the general form

$$u_{k+1} = u_k + \beta_{k+1}F_{1,k+1}(I + R_{k+1}^{-1}G^*\,Q_{k+1}G)^{-1}\,R_{k+1}^{-1}G^*Q_{k+1}\,F_{2,k+1}\,e_k$$

where $F_{1,k+1}$ and $F_{2,k+1}$ are filters.

40. A method according to any of claims 36 to 39 including producing an irregular variation in the filter between iterations.

**Patentansprüche**

1. Steuersystem zum Abstimmen eines Prozesses, der von einer Vorrichtung ausgeführt wird, wobei das System dazu eingerichtet ist, wenigstens eine Eingabe in den Prozess zu steuern und die Eingabe iterativ über aufeinanderfolgende Zyklen zu modifizieren, so dass eine Ausgabe des Prozesses eine Referenzausgabe erreicht, und so, dass bei jeder Iteration eine aktuelle Eingabe $u_{k+1}$ aus einer vorherigen Eingabe $u_k$ unter Verwendung eines Aktualisierungs-Algorithmus bestimmt wird, so dass eine Kostenfunktion minimiert wird, wobei die Kostenfunktion den Nachführfehler zwischen einer berechneten Ausgabe für die aktuelle Eingabe und der Referenzausgabe umfasst, sowie die Änderung zwischen der Eingabe einer vorherigen Iteration und der aktuellen Iteration, **dadurch gekennzeichnet, dass** der Aktualisierungs-Algorithmus folgende allgemeine Form aufweist

$$u_{k+1} = u_k + \beta_{k+1}(I + G^*G)^{-1}G^*e_k$$

wobei

$\beta_{k+1}$ ein Abstimmparameter ist

G ein Modell der Vorrichtung ist

$e_k$ ein Maß für den Nachführfehler ist.

**2.** Steuersystem nach Anspruch 1, bei dem die Kostenfunktion eine Summe von zwei Funktionen umfasst, von denen eine ein Maß des Nachführfehlers ist und die andere ein Maß für die Änderung der Eingabe zwischen Iterationen ist.

**3.** Steuersystem nach Anspruch 2, bei dem die Kostenfunktion die Summe des normalisierten Nachführfehlers und der normalisierten Änderung der Eingabe zwischen Iterationen ist.

**4.** Steuersystem nach einem der vorstehenden Ansprüche, dazu eingerichtet, die Kostenfunktion in Abhängigkeit von wenigstens einem weiteren Abstimmparameter zu minimieren.

**5.** Steuersystem nach Anspruch 4, bei dem der weitere Abstimmparameter eingerichtet ist, um die Konvergenzgeschwindigkeit zu steuern.

**6.** Steuersystem nach Anspruch 5, bei dem der weitere Abstimmparameter benutzerdefinierbar ist, um eine Abstimmung der Konvergenzgeschwindigkeit zu ermöglichen.

**7.** Steuersystem nach einem der vorstehenden Ansprüche, bei dem der Aktualisierungs-Algorithmus die allgemeine Form aufweist:

$$u_{k+1} = u_k + \beta_{k+1}(I + R_{k+1}{}^{-1}G^* Q_{k+1}G)^{-1} R_{k+1}{}^{-1}G^*Q_{k+1}e_k$$

wobei $Q_{k+1}$ und $R_{k+1}$ Abstimmparameter sind.

**8.** Steuersystem nach einem der vorstehenden Ansprüche, dazu eingerichtet, den Abstimmparameter $\beta_{k+1}$ auf eine Weise zu optimieren, die durch den Nachführfehler bestimmt wird.

**9.** Steuersystem nach einem der vorstehenden Ansprüche, bei dem wenigstens einer der Abstimmparameter benutzerdefinierbar ist.

**10.** Steuersystem nach Anspruch 9, das ferner eine Benutzereingabe umfasst, die dazu eingerichtet ist, es einem Benutzer zu ermöglichen, wenigstens einen der Abstimmparameter einzugeben.

**11.** Steuersystem nach Anspruch 10, bei dem die Benutzereingabe eingerichtet ist, um es dem Benutzer zu ermöglichen, den wenigstens einen der Abstimmparameter zwischen Iterationen zu aktualisieren.

**12.** Steuersystem nach einem der vorstehenden Ansprüche, dazu eingerichtet, mehrere Eingaben des Prozesses zu steuern und die jeweiligen Eingaben iterativ über aufeinanderfolgende Zyklen zu modifizieren.

**13.** Steuersystem nach Anspruch 12, dazu eingerichtet, die Eingaben unter Verwendung von Gewichtungsfaktoren zu modifizieren, die dazu eingerichtet sind, die Eingaben zu gewichten, so dass die Geschwindigkeit, mit der die jeweiligen Eingaben modifiziert werden, unabhängig gesteuert werden kann.

**14.** Steuersystem nach Anspruch 13, soweit rückbezogen auf Anspruch 7, bei dem wenigstens einer der Abstimmparameter den Gewichtungsfaktor umfasst.

**15.** Steuersystem nach einem der vorstehenden Ansprüche, dazu eingerichtet, eine Anfangseingabe aus der Referenzausgabe und einem Modell des Systems zu bestimmen.

**16.** Steuersystem nach einem der vorstehenden Ansprüche, dazu eingerichtet, die Ausgabe bei jeder Iteration zu messen und, wenn bei einer Iteration die Ausgabe ein vorbestimmtes Erfordernis erfüllt, das Modifizieren der Eingabe zu beenden.

**17.** Verfahren zum Abstimmen der Steuerung eines Prozesses, der auf einer Vorrichtung ausgeführt wird, wobei das Verfahren umfasst: Steuern wenigstens einer Eingabe in den Prozess und Modifizieren der Eingabe iterativ über aufeinanderfolgende Zyklen, so dass eine Ausgabe des Prozesses eine Referenzausgabe erreicht, und so dass bei jeder Iteration eine aktuelle Eingabe $u_{k+1}$ aus einer vorherigen Eingabe $u_k$ unter Verwendung eines Aktualisierungs-Algorithmus bestimmt wird, so dass eine Kostenfunktion minimiert wird, wobei die Kostenfunktion den Nachführfehler zwischen einer berechneten Ausgabe für die aktuelle Eingabe und der Referenzausgabe umfasst, sowie die Änderung zwischen der Eingabe einer vorherigen Iteration und der aktuellen Iteration, **dadurch gekennzeichnet, dass** der Aktualisierungs-Algorithmus folgende allgemeine Form aufweist

$$u_{k+1} = u_k + \beta_{k+1}(I + G^*G)^{-1}G^*e_k$$

wobei
$\beta_{k+1}$ ein Abstimmparameter ist
$G$ ein Modell der Vorrichtung ist
$e_k$ ein Maß für den Nachführfehler ist.

**18.** Verfahren nach Anspruch 17, bei dem die Kostenfunktion eine Summe von zwei Funktionen umfasst, von denen eine ein Maß des Nachführfehlers ist und die andere ein Maß für die Änderung der Eingabe zwischen Iterationen ist.

**19.** Verfahren nach Anspruch 18, bei dem die Kostenfunktion die Summe des normalisierten Nachführfehlers und der normalisierten Änderung der Eingabe zwischen Iterationen ist.

**20.** Verfahren nach einem der Ansprüche 17 bis 19, bei dem die Kostenfunktion in Abhängigkeit von wenigstens einem weiteren Abstimmparameter minimiert wird.

**21.** Verfahren nach Anspruch 20, bei dem der weitere Abstimmparameter eingerichtet ist, um die Konvergenzgeschwindigkeit zu steuern.

**22.** Verfahren nach Anspruch 21, bei dem der weitere Abstimmparameter benutzerdefiniert ist, um die Konvergenzgeschwindigkeit abzustimmen.

**23.** Verfahren nach einem der Ansprüche 20 bis 22, bei dem der Aktualisierungs-Algorithmus die allgemeine Form aufweist:

$$u_{k+1} = u_k + \beta_{k+1}(I + R_{k+1}^{-1}G^* Q_{k+1}G)^{-1} R_{k+1}^{-1}G^*Q_{k+1}e_k$$

wobei $Q_{k+1}$ und $R_{k+1}$ Abstimmparameter sind.

**24.** Verfahren nach einem der Ansprüche 17 bis 23, bei dem der Abstimmparameter $\beta_{k+1}$ auf eine Weise optimiert wird, die durch den Nachführfehler bestimmt wird.

**25.** Verfahren nach einem der Ansprüche 17 bis 23, bei dem der Abstimmparameter $\beta_{k+1}$ vom Benutzer definierbar ist.

**26.** Verfahren nach einem der Ansprüche 17 bis 25, bei dem der Prozess mehrere Eingaben aufweist und das Verfahren umfasst: Modifizieren der jeweiligen Eingaben iterativ über aufeinanderfolgende Zyklen.

**27.** Verfahren nach Anspruch 26, bei dem die Eingaben unter Verwendung von Gewichtungsfaktoren modifiziert werden, die dazu eingerichtet sind, die Eingänge zu gewichten, so dass die Geschwindigkeit, mit der die jeweiligen Eingaben modifiziert werden, unabhängig gesteuert wird.

**28.** Verfahren nach Anspruch 27, soweit rückbezogen auf Anspruch 23, bei dem wenigstens einer der Abstimmparameter den Gewichtungsfaktor umfasst.

**29.** Verfahren nach einem der Ansprüche 17 bis 28, umfassend: Bestimmen einer Anfangseingabe aus der Referenzausgabe und einem Modell des Systems.

**30.** Verfahren nach einem der Ansprüche 17 bis 29, umfassend: Messen der Ausgabe bei jeder Iteration und, wenn bei einer Iteration die Ausgabe ein vorbestimmtes Erfordernis erfüllt, Beenden des Modifizierens der Eingabe.

**31.** Steuersystem nach einem der Ansprüche 1 bis 16, bei dem der Aktualisierungs-Algorithmus einen Filter umfasst.

**32.** Steuersystem nach Anspruch 31, bei dem der Filter eingerichtet ist, um zwischen Iterationen aktualisiert zu werden.

**33.** Steuersystem nach Anspruch 32, dazu eingerichtet, einem Benutzer die Aktualisierung des Filters zu ermöglichen.

**34.** Steuersystem nach einem der Ansprüche 31 bis 33, bei dem der Aktualisierungs-Algorithmus die allgemeine Form aufweist

$$u_{k+1} = u_k + \beta_{k+1} F_{1,k+1} (I + R_{k+1}^{-1} G^* Q_{k+1} G)^{-1} R_{k+1}^{-1} G^* Q_{k+1} F_{2,k+1} e_k$$

wobei $F_{1,k+1}$ und $F_{2,k+1}$ Filter sind.

**35.** Steuersystem nach einem der Ansprüche 31 bis 34, dazu eingerichtet, eine unregelmäßige Variation im Filter zwischen Iterationen zu erzeugen.

**36.** Verfahren nach einem der Ansprüche 17 bis 30, bei dem der Aktualisierungs-Algorithmus einen Filter umfasst.

**37.** Verfahren nach Anspruch 36, bei dem der Filter zwischen Iterationen aktualisiert wird.

**38.** Verfahren nach Anspruch 36, bei dem der Filter manuell aktualisiert wird.

**39.** Verfahren nach einem der Ansprüche 36 bis 38, bei dem der Aktualisierungs-Algorithmus die allgemeine Form aufweist

$$u_{k+1} = u_k + \beta_{k+1} F_{1,k+1} (I + R_{k+1}^{-1} G^* Q_{k+1} G)^{-1} R_{k+1}^{-1} G^* Q_{k+1} F_{2,k+1} e_k$$

wobei $F_{1,k+1}$ und $F_{2,k+1}$ Filter sind.

**40.** Verfahren nach einem der Ansprüche 36 bis 39, umfassend: Erzeugen von unregelmäßigen Variationen in dem Filter zwischen Iterationen.

**Revendications**

**1.** Système de commande, pour régler un processus accompli par un appareil, le système étant agencé pour commander au moins une entrée au processus et pour modifier l'entrée de manière itérative, sur des cycles successifs, de manière qu'une sortie du processus s'approche d'une sortie de référence, et de manière que, à chaque itération, une entrée actuelle $u_{k+1}$ soit déterminée à partir d'une entrée $u_k$ antérieure en utilisant un algorithme de mise à jour, de manière à minimiser une fonction de coût, la fonction de coût incluant l'erreur de poursuite entre une sortie calculée pour l'entrée actuelle et la sortie de référence, et la variation entre l'entrée d'une itération antérieure et l'itération actuelle, **caractérisé en ce que** l'algorithme de mise à jour présente la forme générale :

$$u_{k+1} = u_k + \beta_{k+1} (I + G^* G)^{-1} G^* e_k$$

dans laquelle :
$\beta_{k+1}$ est un paramètre de réglage,

G est un modèle de l'appareil,
$e_k$ est une mesure de l'erreur de poursuite.

**2.** Système de commande selon la revendication 1, dans lequel la fonction de coût inclut une somme de deux fonctions, dont l'une est une mesure de l'erreur de poursuite et dont l'autre est une mesure de la variation de l'entrée entre des itérations.

**3.** Système de commande selon la revendication 2, dans lequel la fonction de coût inclut une somme de l'erreur de poursuite normalisée et la variation normalisée de l'entrée entre des itérations.

**4.** Système de commande selon l'une quelconque des revendications précédentes, agencé pour minimiser la fonction de coût soumise à au moins un autre paramètre de réglage.

**5.** Système de commande selon la revendication 4, dans lequel l'autre paramètre de réglage est agencé pour commander la vitesse de convergence.

**6.** Système de commande selon la revendication 5, dans lequel l'autre paramètre de réglage est définissable par l'utilisateur, pour permettre le réglage de la vitesse de convergence.

**7.** Système de commande selon l'une quelconque des revendications précédentes, dans lequel l'algorithme de mise à jour présente la forme générale :

$$u_{k+1} = u_k + \beta_{k+1} \ (I + R_{k+1}^{-1} G^* Q_{k+1} G)^{-1} \ R_{k+1}^{-1} G^* Q_{k+1} e_k$$

dans laquelle : $Q_{k+1}$ et $R_{k+1}$ sont des paramètres de réglage.

**8.** Système de commande selon l'une quelconque des revendications précédentes, agencé pour optimiser le paramètre de réglage $\beta_{k+1}$ d'une manière déterminée par l'erreur de poursuite.

**9.** Système de commande selon l'une quelconque des revendications précédentes, dans lequel au moins l'un des paramètres de réglage est définissable par l'utilisateur.

**10.** Système de commande selon la revendication 9, comprenant en outre une entrée utilisateur, agencée pour permettre à un utilisateur d'entrer au moins l'un des paramètres de réglage.

**11.** Système de commande selon la revendication 10, dans lequel l'entrée utilisateur est agencée pour permettre à l'utilisateur de mettre à jour le au moins un paramètre de réglage entre des itérations.

**12.** Système de commande selon l'une quelconque des revendications précédentes, agencé pour commander une pluralité d'entrées au processus, et pour modifier chaque entrée de manière itérative, sur des cycles successifs.

**13.** Système de commande selon la revendication 12, agencé pour modifier les entrées en utilisant un facteur de pondération, agencé pour pondérer les entrées de manière que la vitesse à laquelle chaque entrée est modifiée puisse être commandée indépendamment.

**14.** Système de commande selon la revendication 13, dépendant de la revendication 7, dans lequel au moins l'un des paramètres de réglage comprend le facteur de pondération.

**15.** Système de commande selon l'une quelconque des revendications précédentes, agencé pour déterminer une entrée initiale, à partir de la sortie de référence et d'un modèle du système.

**16.** Système de commande selon l'une quelconque des revendications précédentes, agencé pour mesurer la sortie à chaque itération et, lorsque, à une itération, la sortie satisfait à une exigence prédéterminée, cesser de procéder à la modification de l'entrée.

**17.** Procédé de réglage de la commande d'un processus, accompli sur un appareil, le procédé comprenant la commande d'au pions une entrée au processus et la modification de l'entrée de manière itérative, sur des cycles successifs, de manière qu'une sortie du processus s'approche d'une sortie de référence, et de manière que, à chaque itération, une entrée actuelle $u_{k+1}$ soit déterminée à partir d'une entrée $u_k$ antérieure en utilisant un algorithme de mise à jour, de manière à minimiser une fonction de coût, la fonction de coût incluant l'erreur de poursuite entre une sortie calculée pour l'entrée actuelle et la sortie de référence, et la variation entre l'entrée d'une itération antérieure et l'itération actuelle, **caractérisé en ce que** l'algorithme de mise à jour présente la forme générale :

$$u_{k+1} = u_k + \beta_{k+1} \, (I+G^*G)^{-1} \, G^*e_k$$

dans laquelle :
$\beta_{k+1}$ est un paramètre de réglage,
$G$ est un modèle de l'appareil,
$e_k$ est une mesure de l'erreur de poursuite.

**18.** Procédé selon la revendication 17, dans lequel la fonction de coût inclut une somme de deux fonctions, dont l'une est une mesure de l'erreur de poursuite et dont l'autre est une mesure de la variation de l'entrée entre des itérations.

**19.** Procédé selon la revendication 18, dans lequel la fonction de coût est la somme de l'erreur de poursuite normalisée et la variation normalisée de l'entrée entre des itérations.

**20.** Procédé selon l'une quelconque des revendications 17 à 19, dans lequel la fonction de coût est minimisée, en étant soumise à au moins un autre paramètre de réglage.

**21.** Procédé selon la revendication 20, dans lequel l'autre paramètre de réglage est agencé pour commander la vitesse de convergence.

**22.** Procédé selon la revendication 21, dans lequel l'autre paramètre de réglage est définissable par l'utilisateur, pour permettre le réglage de la vitesse de convergence.

**23.** Procédé selon l'une quelconque des revendication 20 à 22, dans lequel l'algorithme de mise à jour présente la forme générale :

$$u_{k+1} = u_k + \beta_{k+1} \, (I+R_{k+1}^{-1}G^*Q_{k+1}G)^{-1} \, R_{k+1}^{-1}G^*Q_{k+1}e_k$$

dans laquelle : $Q_{k+1}$ et $R_{k+1}$ sont des paramètres de réglage.

**24.** Procédé selon l'une quelconque des revendications 17 à 23, dans lequel le paramètre de réglage $\beta_{k+1}$ est optimisé d'une manière déterminée par l'erreur de poursuite.

**25.** Procédé selon l'une quelconque des revendications 17 à 23, dans lequel le paramètre de réglage $\beta_{k+1}$ est défini par l'utilisateur.

**26.** Procédé selon l'une quelconque des revendications 17 à 25, dans lequel le processus présente une pluralité d'entrées, le procédé comprenant la modification de chaque entrée, de manière itérative sur des cycles successifs.

**27.** Procédé selon la revendication 26, dans lequel les entrées sont modifiées en utilisant un facteur de pondération, agencé pour pondérer les entrées de manière que la vitesse à laquelle chaque entrée est modifiée puisse être commandée indépendamment.

**28.** Procédé selon la revendication 27, dépendant de la revendication 23, dans lequel au moins l'un des paramètres de réglage comprend le facteur de pondération.

**29.** Procédé selon l'une quelconque des revendications 17 à 28, comprenant la détermination d'une entrée initiale, à partir de la sortie de référence et d'un modèle du système.

**30.** Procédé selon l'une quelconque des revendications 17 à 29, incluant la mesure de la sortie à chaque itération et, lorsque, à une itération, la sortie satisfait à une exigence prédéterminée, la cessation de toute modification de l'entrée.

**31.** Système de commande selon l'une quelconque des revendications 1 à 16, dans lequel l'algorithme de mise à jour comprend un filtre.

**32.** Système de commande selon la revendication 31, dans lequel le filtre est agencé pour être mis à jour entre des itérations.

**33.** Système de commande selon la revendication 32, agencé pour permettre à un utilisateur de mettre à jour le filtre.

**34.** Système de commande selon l'une quelconque des revendications 31 à 33, dans lequel l'algorithme de mise à jour est de la forme générale :

$$u_{k+1} = u_k + \beta_{k+1}\, F_{1,k+1}\, (I + R_{k+1}^{-1} G^* Q_{k+1} G)^{-1}\, R_{k+1}^{-1} G^* Q_{k+1}\, F_{2,k+1}\, e_k$$

dans lequel $F_{1,k+1}$ et $F_{2,k+1}$ sont des filtres.

**35.** Système de commande selon l'une quelconque des revendications 31 à 34, agencé pour produire une variation irrégulière dans le filtre, entre des itérations.

**36.** Procédé selon l'une quelconque des revendications 17 à 30, dans lequel l'algorithme de mise à jour comprend un filtre.

**37.** Procédé selon la revendication 36, dans lequel le filtre est mis à jour entre des itérations.

**38.** Procédé selon la revendication 36, dans lequel le filtre est mis à jour manuellement.

**39.** Procédé selon l'une quelconque des revendications 36 à 38, dans lequel l'algorithme de mise à jour est de la forme générale :

$$u_{k+1} = u_k + \beta_{k+1}\, F_{1,k+1}\, (I + R_{k+1}^{-1} G^* Q_{k+1} G)^{-1}\, R_{k+1}^{-1} G^* Q_{k+1}\, F_{2,k+1}\, e_k$$

dans lequel $F_{1,k+1}$ et $F_{2,k+1}$ sont des filtres.

**40.** Procédé selon l'une quelconque des revendications 36 à 39, incluant la production d'une variation irrégulière dans le filtre, entre des itérations.

## Fig. 1

*Fig. 2*

*Fig. 3*

*Fig. 4*

**EP 1 861 752 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- An evolutionary based optimisation method for non-linear iterative learning control systems. **HATZIKOS V E et al.** Proceedings of the 2003 American Control Conference. Denver, CO, 04 June 2003, vol. 6-6